# EUROPÄISCHE PATENTSCHRIFT

(11) **EP 3 485 174 B1**
(45) Veröffentlichungstag und Bekanntmachung des Hinweises auf die Patenterteilung: **30.12.2020**
(21) Anmeldenummer: 17742399.3
(22) Anmeldetag: 11.07.2017
(51) Int. Cl.: F16B 13/14

(54) **ANKERSTANGE FÜR EIN VERBUNDANKERSYSTEM**
ANCHORING BAR FOR A COMPOSITE ANCHOR SYSTEM
TIGE D'ANCRAGE POUR UN SYSTEME D'ANCRAGE COMPOSITE

(30) Priorität: 18.07.2016 EP 16179858
(43) Veröffentlichungstag der Anmeldung: 22.05.2019
(73) Patentinhaber: Hilti Aktiengesellschaft, 9494 Schaan (LI)
(72) Erfinder: KUHN, Martin, 82110 Germering (DE)
(74) Vertreter: Hilti Aktiengesellschaft Corporate Intellectual Property
(86) Internationale Anmeldenummer: PCT/EP2017/067375
(87) Internationale Veröffentlichungsnummer: WO 2018/015209

(56) Entgegenhaltungen:
- EP-A1- 2 518 337
- DE-A1- 4 108 500

## Beschreibung

Die Erfindung betrifft eine Ankerstange für ein nachspreizendes Verbundankersystem zur Verwendung in einem mit Mörtelmasse gefüllten Bohrloch.

Nachspreizende Verbundankersysteme bestehen aus einer speziellen Ankerstange und einer dazugehörigen Mörtelpatrone. Die Mörtelpatrone besteht aus einer Hülle, in der eine vorbestimmte Menge an Mörtelmasse eingeschlossen ist.

Zur Befestigung der Ankerstange in einem Bohrloch, das in einen Träger, z.B. Beton, eingebracht wurde, wird zunächst die Mörtelpatrone in das Bohrloch eingeführt und die Ankerstange daraufhin in das auf diese Weise mit Mörtelmasse versehene Bohrloch hineingedreht. Beim Eindrehen der Ankerstange wird die Hülle der Mörtelpatrone zerstört und die Mörtelmasse gemischt. Die Mörtelmasse breitet sich daraufhin im Bohrloch und entlang der Ankerstange aus, bis schließlich das gesamte Bohrloch mit Mörtelmasse gefüllt und damit auch der Teil der Ankerstange, der in das Bohrloch eingeführt wurde, vollständig mit Mörtelmasse umgeben ist.

In einer anderen Bauform bestehen nachspreizende Verbundankersysteme aus einer speziellen Ankerstange und einem aushärtenden Injektions-/Verbundmörtel. Dieser wird in unausgehärtetem Zustand ins Bohrloch eingebracht und die Ankerstange eingeschoben.

Bei beiden Bauformen dieser Anker ist es, nach erfolgter Aushärtung, nötig, die Ankerstange selbst vom Verbundmörtel zu trennen, sodass sich diese in axialer Richtung gegeneinander verschieben können. Die aktive Trennung der Ankerstange vom Verbundmörtel, bzw. das Lösen der Ankerstange von der Mörtelschale, wird auch als Aktivierung der Ankerstange bezeichnet. Erfolgt diese Aktivierung nicht, kann das volle Lastniveau, durch ausbleibendes Nachspreizen, nicht erreicht werden.

Die beschriebenen Ankerstangen weisen üblicherweise einen Verankerungsbereich auf, der in das Bohrloch eingeführt und von der Mörtelmasse umschlossen wird, und einen Anschlussbereich, an dem die zu tragende Last befestigt wird. Üblicherweise weist der Anschlussbereich ein Gewinde zur Befestigung auf.

Bei Ankerstangen, die eine variable Setztiefe zulassen, d.h. unterschiedlich tief im Träger befestigt werden können, kann es vorkommen, dass die Ankerstange soweit ins Bohrloch eingeführt wird, dass sich auch Abschnitte des Anschlussbereiches mit Gewinde im Bohrloch befinden. Diese Behindern, nach erfolgter Aushärtung, die sogenannte Aktivierung der Konen des nachspreizenden Elementes.

Es ist daher Aufgabe der Erfindung, eine Ankerstange und eine Befestigungsanordnung bereitzustellen, bei der eine leichte Aktivierung der Konen der Ankerstange auch bei maximaler Setztiefe möglich ist.

Die Aufgabe wird zum einen gelöst durch eine Ankerstange für ein Verbundankersystem zur Verwendung in einem mit Mörtelmasse gefüllten Bohrloch, mit einem Verankerungsbereich, der das vordere Ende der Ankerstange umfasst, und einem Anschlussbereich, der ein Gewinde und an seinem vorderseitigen Ende einen Übergangsbereich aufweist, wobei das Gewinde zumindest teilweise im Übergangsbereich vorgesehen und im Übergangsbereich mit einer Beschichtung verschlossen ist. Die Erfindung beruht auf dem Grundgedanken, eine Aktivierung der Ankerstange jederzeit zu ermöglichen, auch bzw. insbesondere wenn die Ankerstange so tief gesetzt wurde, dass das Gewinde teilweise innerhalb der Mörtelmasse liegt. Zu diesem Zweck ist das Gewinde mit der Beschichtung verschlossen, das heißt, dass die Gewindegänge des Gewindes durch die Beschichtung derart eingeebnet oder überdeckt werden, dass keine Mörtelmasse in die Gewindegänge eindringen kann. Dies verhindert, dass die Mörtelmasse in den Gewindegängen aushärten kann, wodurch die Mörtelmasse mit der Ankerstange verzahnen würde. Durch die Beschichtung wird eine Verzahnung zwischen Mörtelmasse und Ankerstange mit Sicherheit verhindert, sodass (fast) keine Lasten vom Gewinde auf die ausgehärtete Mörtelmasse übertragen werden können.

Vorzugsweise ist die Beschichtung derart ausgebildet, dass sie das Gewinde kontinuierlich freigibt, wenn ein zum Gewinde komplementäres Innengewinde entlang beschichteter Abschnitte des Gewindes geschraubt wird, wodurch die Funktion des Gewindes entlang seiner vollen Länge zur Verfügung steht, wenn das Gewinde nicht in das Bohrloch eingeführt sein sollte, sodass eine Mutter o.Ä. entlang des gesamten Anschlussabschnittes aufgeschraubt werden kann.

In einer Ausführungsform der Erfindung hat das Gewinde mit der Beschichtung im Übergangsbereich eine Außenkontur, die in axialer Richtung keinen Auszugwiderstand erzeugt, um eine Aktivierung der Ankerstange zuzulassen. Bevorzugt handelt es sich bei der Außenkontur um eine zylindrische Außenkontur, da hierdurch ferner das Einführen der Ankerstange in das Bohrloch vereinfacht wird.

In einer Ausgestaltung der Erfindung beginnt der Übergangsbereich in einem Abstand zum vorderen Ende der Ankerstange, der der minimalen Setztiefe der Ankerstange entspricht, und der Übergangsbereich erstreckt sich vom vorderen Ende weg. Dadurch wird ermöglicht, dass sich das Gewinde auch bei Einsatz der Ankerstange bei minimaler Setztiefe bis an die Bohrlochöffnung erstrecken kann. Mit minimaler Setztiefe ist hierbei die minimal zugelassene Setztiefe des Verbundankersystems gemeint.

Beispielsweise ist das Material der Beschichtung derart gewählt, dass es dadurch abschnittsweise aus dem Gewindegang des Gewindes teilweise entfernt werden kann, dass ein zum Gewinde komplementäres Innengewinde auf den entsprechenden Abschnitt des Gewindes aufgeschraubt wird, sodass die Beschichtung aus dem Gewindegang zumindest teilweise herausgepresst wird.

Vorzugsweise ist das Material ein Wachs, wodurch die Beschichtung kostengünstig hergestellt werden kann. Insbesondere kann das Wachs umweltverträglich sein und schnell abgebaut werden, sodass keine Umweltschäden auftreten, wenn das Verbundankersystem im Freien verwendet wird.

Aus der DE 41 08 500 A1 ist ein Gebirgsanker bekannt.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Figur 1: eine erfindungsgemäße Ankerstange in einer Seitenansicht,
- Figur 2: eine schematische Schnittansicht der Ankerstange gemäß Figur 1,
- Figur 3: schematisch die Ankerstange gemäß Figur 1 in einem in einem Bohrloch eingesetzten Zustand bei maximaler Setztiefe, und
- Figur 4: schematisch die Ankerstange gemäß Figur 1 in einem in einem Bohrloch eingesetzten Zustand bei minimaler Setztiefe.

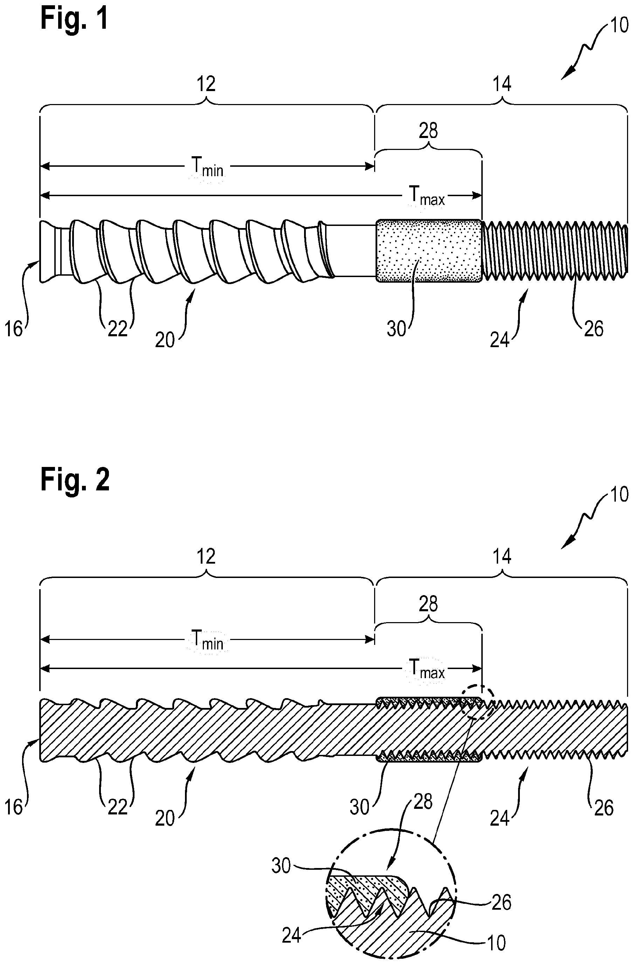

In den Figuren 1 und 2 ist eine Ankerstange 10 für ein Verbundankersystem mit einem Verankerungsbereich 12 und einem Anschlussbereich 14 dargestellt.

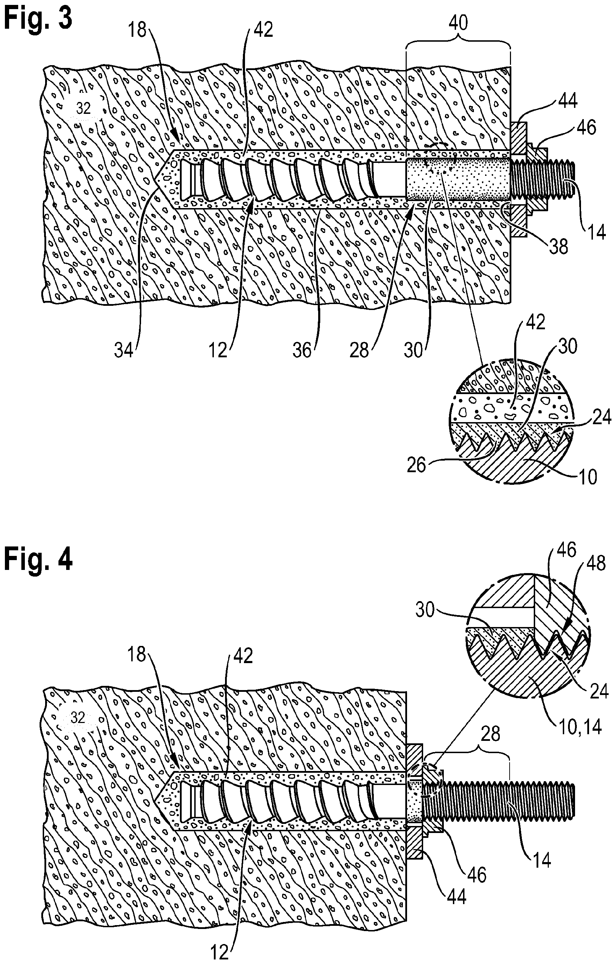

Der Verankerungsbereich 12 umfasst das vordere Ende 16 der Ankerstange 10, das heißt, das Ende der Ankerstange 10, mit dem die Ankerstange 10 zuerst in ein Bohrloch 18 (vgl. Fig. 3) eingeführt wird. Der Verankerungsbereich 12 erstreckt sich bis zum Anschlussbereich 14, der an den Verankerungsbereich 12 anschließt.

Im Verankerungsbereich 12 ist in der gezeigten Ausführungsform ein Befestigungsgewinde 20 ausgebildet. Das Befestigungsgewinde 20 weist in einer Seitenansicht konische Abschnitte 22 auf, die axial ausgerichtet sind, sodass sie sich zum vorderen Ende 16 hin verbreitern.

Am Anschlussbereich 14 ist ein Gewinde 24 ausgebildet, mit dem Lasten an der Ankerstange 10 befestigt werden können. In der gezeigten Ausführungsform erstreckt sich das Gewinde 24 entlang des gesamten Anschlussbereiches 14.

Das Gewinde 24 weist einen Gewindegang 26 auf, wie in der Vergrößerung der Figur 2 zu erkennen ist.

Der Anschlussbereich 14 beginnt vom vorderen Ende 16 der Ankerstange 10 aus in einem Abstand zum vorderen Ende 16 der Ankerstange 10, der der minimalen Setztiefe Tₘᵢₙ der Ankerstange 10 entspricht.

Der Anschlussbereich 14 weist zudem einen Übergangsbereich 28 auf, der sich vom vorderseitigen Ende des Anschlussbereiches 14 zum anderen Ende des Anschlussbereiches 14 hin erstreckt. Der Übergangsbereich 28 endet beispielsweise in einem Abstand vom vorderen Ende 16, der der maximalen Setztiefe Tₘₐₓ der Ankerstange 10 entspricht.

In anderen Worten erstreckt sich der Übergangsbereich 28 in einem Abschnitt des Anschlussbereiches 14 zwischen der minimalen Setztiefe Tₘᵢₙ und der maximalen Setztiefe Tₘₐₓ vom vorderen Ende 16 der Ankerstange aus betrachtet.

Die Angaben der minimalen Setztiefe Tₘᵢₙ und der maximalen Setztiefe Tₘₐₓ entsprechen dabei den Setztiefen, für die das Verbundankersystem der Ankerstange 10 zugelassen ist.

Das Gewinde 24 erstreckt sich entlang des gesamten Übergangsbereichs 28. Im Übergangsgebereich 28 ist das Gewinde 24 von einer Beschichtung 30 verschlossen. Hierzu ist der Gewindegang 26 des Gewindes 24 vollständig durch das Material der Beschichtung 30 ausgefüllt. Das Material der Beschichtung 30 ist in der gezeigten Ausführungsform ein Wachs.

Das Wachs kann dabei umweltverträglich, insbesondere biologisch abbaubar sein, um keine Umweltschäden bei einem Außeneinsatz des Verbundsystems hervorzurufen.

Im Übergangsbereich 28 wird das Gewinde 24 von der Beschichtung 30 vollständig abgedeckt, sodass die Ankerstange 10 im Übergangsbereich 28 einen glatten Außenumfang hat, wie in der Vergrößerung der Figur 2 zu sehen ist. Auch kann das Gewinde 24, das mit der Beschichtung 30 versehen ist, im Übergangsbereich 28 eine zylindrische Kontur haben. Denkbar sind jedoch auch andere Konturen, insbesondere unregelmäßige Konturen, die sich durch das Auftragen der Beschichtung 30 ergeben.

In Figur 3 ist die Ankerstange 10 dargestellt, wie sie mit maximaler Setztiefe Tₘₐₓ in einem Bohrloch 18 eingesetzt ist.

Das Bohrloch 18 ist in einem Träger 32, beispielsweise in Beton, gebohrt worden und weist einen Bohrlochgrund 34, eine Wandung 36 und eine Bohrlochöffnung 38 auf.

Die Ankerstange 10 ist so weit in das Bohrloch 18 eingeführt, dass sich der gesamte Verankerungsbereich 12 innerhalb des Bohrloches 18 befindet. Auch der Übergangsbereich 28 ist mitsamt Teilen des Gewindes 24 vollständig in das Bohrloch 18 eingeführt und so in einem Abschnitt 40 des Bohrloches 18 angeordnet ist, der an die Bohrlochöffnung 38 angrenzt. Das Bohrloch 18 ist dann vollständig mit Mörtelmasse 42 gefüllt.

An dem aus dem Bohrloch 18 herausragenden Teil des Anschlussbereiches 14 ist ein Anbauteil 44, das zum Beispiel Lasten tragen kann, mittels einer Mutter 46 an der Ankerstange 10 befestigt.

Die Mutter 46 weist ein zum Gewinde 24 des Anschlussbereiches 14 komplementäres Innengewinde 48 auf und wurde vom hinteren Ende der Ankerstange 10 in Richtung des Bohrloches 18 auf das Gewinde 24 aufgeschraubt.

Im gesamten Bohrloch 18 wird die Ankerstange 10 von der Mörtelmasse 42 umgeben, die sich mit der Wandung 36 des Bohrloches 18 und dem Verankerungsbereich 12 der Ankerstange 10 verbindet, wodurch die Ankerstange 10 sicher im Bohrloch 18 befestigt ist.

Die Mörtelmasse 42 verbindet sich jedoch nicht mit der Ankerstange 10 im Anschlussbereich 14 bzw. im Übergangsbereich 28, da das Material der Beschichtung, hier also das Wachs, derart gewählt ist, dass es sich nicht mit der Mörtelmasse 42 verbindet bzw. ein Einfließen der Mörtelmasse 42 in das Gewinde verhindert.

In der Vergrößerung der Figur 3 ist zu erkennen, dass die Mörtelmasse 42 nicht in die Gewindegänge 26 im Übergangsbereich 28 eingedrungen ist, da die Beschichtung 30 die Gewindegänge 26 wirksam verschlossen hat. Entsprechend liegt die Mörtelmasse 42 nur an dem glatten Außenumfang im Übergangsbereich 28 an, sodass die Mörtelmasse 42 und damit auch die Wandung 36 im Abschnitt 40 nur geringen Kräften ausgesetzt ist, wenn die Ankerstange 10 belastet wird. Somit kann das Gewinde 24 keine Lasten auf außenliegende Bereiche des ausgehärteten Mörtels übertragen, sodass eine einfache Aktivierung der nachspreizenden Ankerstange erfolgen kann.

In Figur 4 ist eine ähnliche Situation wie in Figur 3 dargestellt. In der Situation in Figur 4 ist jedoch die Ankerstange 10 nur mit minimaler Setztiefe Tₘᵢₙ im Träger 32 befestigt.

In dieser Situation ist lediglich der Verankerungsbereich 12 in das Bohrloch 18 eingeführt und von der Mörtelmasse 42 umgeben. Der gesamte Anschlussbereich 14, also auch der gesamte Übergangsbereich 28 ragt aus dem Bohrloch 18 heraus.

Auch in Figur 4 ist ein Anbauteil 44 mit einer Mutter 46 an der Ankerstange 10 befestigt. Dabei befindet sich die Mutter 46 innerhalb des Übergangsbereiches 28, der ursprünglich mit der Beschichtung 30 versehen war.

Beim Aufschrauben der Mutter 46 wurde durch das Innengewinde 48 der Mutter 46 das Material der Beschichtung 30, hier also das Wachs, entlang des Übergangsbereiches 28 aus dem Gewindegang 26 des Gewindes 24 entfernt bzw. herausgepresst, sodass das Gewinde 24 kontinuierlich freigegeben wurde. Dies ist in der Vergrößerung der Figur 4 zu erkennen.

Das Wachs wurde dabei so gewählt, dass es durch die Mutter 46 aus dem Gewindegang 26 herausgepresst werden kann.

Auf diese Weise ist es möglich, das Gewinde 24 trotz der Beschichtung 30 entlang seiner vollen Länge zur Befestigung von Anbauteilen 44 oder Ähnlichem zu verwenden.

Um die volle Länge des Gewindes 24 zu nutzen, kann die Mutter 46 auch in einer in Figur 4 nicht dargestellten Situation ohne Anbauteil 44 bis zur Bohrlochöffnung 38 hin geschraubt werden, das heißt, bis zu dem Punkt, an dem das Gewinde 24 zu Ende ist.

## Patentansprüche

1. Ankerstange für ein Verbundankersystem zur Verwendung in einem mit Mörtelmasse (42) gefüllten Bohrloch (18), mit einem Verankerungsbereich (12), der das vordere Ende (16) der Ankerstange (10) umfasst, und einem Anschlussbereich (14), der ein Gewinde (24) und an seinem vorderseitigen Ende einen Übergangsbereich (28) aufweist, wobei das Gewinde (24) zumindest teilweise im Übergangsbereich (28) vorgesehen und im Übergangsbereich (28) mit einer Beschichtung (30) verschlossen ist.

2. Ankerstange nach Anspruch 1, **dadurch gekennzeichnet, dass** die Beschichtung (30) derart ausgebildet ist, dass sie das Gewinde (24) kontinuierlich freigibt, wenn ein zum Gewinde (24) komplementäres Innengewinde entlang beschichteter Abschnitte des Gewindes (24) geschraubt wird.

3. Ankerstange nach Anspruch 1 oder 2, **dadurch gekennzeichnet, dass** die Beschichtung (30) den Gewindegang (26) des Gewindes (24) innerhalb des Übergangsbereiches (28) vollständig ausfüllt und dadurch verschließt.

4. Ankerstange nach einem der vorhergehenden Ansprüche, **dadurch gekennzeichnet, dass** das Gewinde (24) mit der Beschichtung (3) im Übergangsbereich (28) eine Außenkontur hat, welche in axialer Richtung keinen Auszugswiderstand erzeugt.

5. Ankerstange nach Anspruch 4, **dadurch gekennzeichnet, dass** das Gewinde (24) mit der Beschichtung (30) im Übergangsbereich (28) eine zylindrische Außenkontur hat.

6. Ankerstange nach einem der vorhergehenden Ansprüche, **dadurch gekennzeichnet, dass** die Ankerstange (10) im Übergangsbereich (28) einen glatten Außenumfang hat.

7. Ankerstange nach einem der vorhergehenden Ansprüche, **dadurch gekennzeichnet, dass** der Übergangsbereich (28) in einem Abstand zum vorderen Ende (16) der Ankerstange (10) beginnt, der der minimalen Setztiefe (Tₘᵢₙ) der Ankerstange (10) entspricht, und sich der Übergangsbereich (28) vom vorderen Ende (16) weg erstreckt.

8. Ankerstange nach einem der vorhergehenden Ansprüche, **dadurch gekennzeichnet, dass** sich der Übergangsbereich (28) vom vorderen Ende (16) der Ankerstange (10) aus betrachtet bis zu einem Abstand zum vorderen Ende (16) der Ankerstange erstreckt, der der maximalen Setztiefe (Tₘₐₓ) der Ankerstange (10) entspricht.

9. Ankerstange nach einem der vorhergehenden Ansprüche, **dadurch gekennzeichnet, dass** das Material der Beschichtung (30) derart gewählt ist, dass es sich nicht mit der Mörtelmasse (42) im Übergangsbereich (28) verbindet.

10. Ankerstange nach einem der Ansprüche 3 bis 9, sofern auf Anspruch 2 rückbezogen, **dadurch gekennzeichnet, dass** das Material der Beschichtung (30) derart gewählt ist, dass es dadurch abschnittsweise aus dem Gewindegang (26) des Gewindes (24) teilweise entfernt werden kann, dass ein zum Gewinde (24) komplementäres Innengewinde (48) mit den entsprechenden Abschnitten des Gewindes (24) in Eingriff gebracht wird.

11. Ankerstange nach einem der vorhergehenden Ansprüche, **dadurch gekennzeichnet, dass** das Material der Beschichtung (30) ein Wachs ist.

12. Ankerstange nach einem der vorhergehenden Ansprüche, **dadurch gekennzeichnet, dass** der Verankerungsbereich (12) ein Befestigungsgewinde (20) aufweist.

13. Ankerstange nach Anspruch 12, **dadurch gekennzeichnet, dass** das Befestigungsgewinde (20) konische Abschnitte (22) hat.

## Claims

1. Anchor rod for a bonded anchor system for use in a borehole (18) filled with a mortar composition (42), having an anchoring region (12) which comprises the front end (16) of the anchor rod (10), and a connecting region (14) which has a thread (24) and has a transition region (28) at the front end thereof, wherein the thread (24) is at least partially provided in the transition region (28) and is sealed with a coating (30) in the transition region (28).

2. Anchor rod according to claim 1, **characterized in that** the coating (30) is designed such that it continuously exposes the thread (24) when an internal thread which is complementary to the thread (24) is screwed along coated portions of the thread (24).

3. Anchor rod according to either claim 1 or claim 2, **characterized in that** the coating (30) completely fills and thereby seals the thread pitch (26) of the thread (24) within the transition region (28).

4. Anchor rod according to any of the preceding claims, **characterized in that** the thread (24) having the coating (3) in the transition region (28) has an outer contour that does not generate any pull-out resistance in the axial direction.

5. Anchor rod according to claim 4, **characterized in that** the thread (24) having the coating (30) in the transition region (28) has a cylindrical outer contour.

6. Anchor rod according to any of the preceding claims, **characterized in that** the anchor rod (10) has a smooth outer circumference in the transition region (28).

7. Anchor rod according to any of the preceding claims, **characterized in that** the transition region (28) begins at a distance from the front end (16) of the anchor rod (10) that corresponds to the minimum setting depth (Tₘᵢₙ) of the anchor rod (10), and the transition region (28) extends away from the front end (16).

8. Anchor rod according to any of the preceding claims, **characterized in that** the transition region (28), viewed from the front end (16) of the anchor rod (10), extends up to a distance from the front end (16) of the anchor rod that corresponds to the maximum setting depth (Tₘₐₓ) of the anchor rod (10).

9. Anchor rod according to any of the preceding claims, **characterized in that** the material of the coating (30) is selected such that it does not bond with the mortar composition (42) in the transition region (28).

10. Anchor rod according to any of claims 3 to 9, insofar as said claims refer back to claim 2, **characterized in that** the material of the coating (30) is selected such that it can be partially removed from the thread pitch (26) of the thread (24) in portions by bringing an internal thread (48) which is complementary to the thread (24) into engagement with the corresponding portions of the thread (24).

11. Anchor rod according to any of the preceding claims, **characterized in that** the material of the coating (30) is a wax.

12. Anchor rod according to any of the preceding claims, **characterized in that** the anchoring region (12) has a fastening thread (20).

13. Anchor rod according to claim 12, **characterized in that** the fastening thread (20) has conical portions (22).

## Revendications

1. Tige d'ancrage pour un système d'ancrage composite destiné à être utilisé dans un trou de forage (18) rempli d'une masse de mortier (42), comportant une zone d'ancrage (12) qui comprend l'extrémité avant (16) de la tige d'ancrage (10), et une zone de raccord (14) qui présente un filetage (24) et une zone de transition (28) au niveau de son extrémité avant, le filetage (24) étant au moins partiellement prévu dans la zone de transition (28) et étant enfermé dans la zone de transition (28) au moyen d'un revêtement (30).

2. Tige d'ancrage selon la revendication 1, **caractérisée en ce que** le revêtement (30) est conçu de telle sorte qu'il libère le filetage (24) en continu lorsqu'un filetage intérieur complémentaire au filetage (24) est vissé le long de sections revêtues du filetage (24).

3. Tige d'ancrage selon la revendication 1 ou 2, **caractérisée en ce que** le revêtement (30) remplit entièrement et par conséquent enferme le pas (26) du filetage (24) à l'intérieur de la zone de transition (28).

4. Tige d'ancrage selon l'une des revendications précédentes, **caractérisée en ce que** le filetage (24) comportant le revêtement (30) dans la zone de transition (28) possède un contour extérieur qui ne génère aucune résistance à l'extraction dans la direction axiale.

5. Tige d'ancrage selon la revendication 4, **caractérisée en ce que** le filetage (24) comportant le revêtement (30) dans la zone de transition (28) possède un contour extérieur cylindrique.

6. Tige d'ancrage selon l'une des revendications précédentes, **caractérisée en ce que** la tige d'ancrage (10) possède une circonférence extérieure lisse dans la zone de transition (28).

7. Tige d'ancrage selon l'une des revendications précédentes, **caractérisée en ce que** la zone de transition (28) débute à une distance de l'extrémité avant (16) de la tige d'ancrage (10) qui correspond à la profondeur de pose minimale (Tₘᵢₙ) de la tige d'ancrage (10), et **en ce que** la zone de transition (28) s'étend en s'éloignant de l'extrémité avant (16).

8. Tige d'ancrage selon l'une des revendications précédentes, **caractérisée en ce que** la zone de transition (28), vue à partir de l'extrémité avant (16) de la tige d'ancrage (10), s'étend jusqu'à une distance de l'extrémité avant (16) de la tige d'ancrage qui correspond à la profondeur de pose maximale (Tₘₐₓ) de la tige d'ancrage (10).

9. Tige d'ancrage selon l'une des revendications précédentes, **caractérisée en ce que** la matière du revêtement (30) est choisie de telle sorte qu'elle ne se lie pas à la masse de mortier (42) dans la zone de transition (28).

10. Tige d'ancrage selon l'une des revendications 3 à 9, lorsqu'elle se rapporte à la revendication 2, **caractérisée en ce que** la matière du revêtement (30) est choisie de telle sorte qu'elle peut par conséquent être éliminée partiellement du pas (26) du filetage (24) sur certaines sections, et **en ce qu'**un filetage intérieur (48) complémentaire au filetage (24) est mis en prise avec les sections correspondantes du filetage (24).

11. Tige d'ancrage selon l'une des revendications précédentes, **caractérisée en ce que** la matière du revêtement (30) est une cire.

12. Tige d'ancrage selon l'une des revendications précédentes, **caractérisée en ce que** la zone d'ancrage (12) présente un filetage de fixation (20).

13. Tige d'ancrage selon la revendication 12, **caractérisée en ce que** le filetage de fixation (20) possède des sections coniques (22).
